# EUROPÄISCHE PATENTSCHRIFT

(11) **EP 2 213 629 B1**
(45) Veröffentlichungstag und Bekanntmachung des Hinweises auf die Patenterteilung: **15.06.2011**
(21) Anmeldenummer: 09001327.7
(22) Anmeldetag: 30.01.2009
(51) Int. Cl.: C02F 3/32, B01D 1/00

(54) **Anlage und Verfahren zur Aufbereitung und Entsorgung von salz- und ölhaltigem Abwasser**
Device and method for treating and disposing of waste water containing salt and oil
Installation et procédé de préparation et d'élimination d'eaux usées contenant des sels et des huiles

(43) Veröffentlichungstag der Anmeldung: 04.08.2010
(73) Patentinhaber: BAUER Umwelt GmbH, 86529 Schrobenhausen (DE)
(72) Erfinder: Rausch, Wolf-Dieter, 83435 Bad Reichenhall (DE); Breuer, Roman, 85276 Pfaffenhofen an der Ilm (DE)
(74) Vertreter: Wunderlich, Rainer

(56) Entgegenhaltungen:
- WO-A-2005/108310
- WO-A-2009/000845
- FR-A- 2 834 284
- US-A- 3 770 623
- US-A- 5 174 897
- US-A- 5 389 257
- SLUIJTERMAN A C ET AL: "Opportunities for re-use of produced water around desert oil fields" PROCEEDINGS OF THE INTERNATIONAL PETROLEUM CONFERENCE AND EXHIBITION,, Nr. 88667, 10. Oktober 2004 (2004-10-10), Seiten 1-7, XP002477367

## Beschreibung

Die Erfindung betrifft eine Anlage zur Aufbereitung und Entsorgung von salz- und ölhaltigem Abwasser gemäß dem Patentanspruch 1 sowie ein Verfahren zur Aufbereitung und Entsorgung von salz- und ölhaltigem Abwasser gemäß dem Patentanspruch 7.

Pflanzenkläranlagen bewirken eine naturnahe biologische Abwasserreinigung unter Verwendung von mit Helophyten bewachsenen Bodenfiltern. Besonders aus ökonomischen und ökologischen Gründen eignen sie sich für die dezentrale Abwasserbehandlung, die sich durch geringe spezifische Kanal-/Rohrleitungslängen auszeichnet. Neben dem Erfordernis geeigneter Flächengrößen und -lagen bieten sie den bedeutsamen Vorteil ihrer naturfreundlichen Einbindung in das Umfeld.

Diese Anlagen auf biologischer Basis unterliegen derzeit noch einer intensiven Weiterentwicklung, wobei neben der Erweiterung ihrer Einsatzmöglichkeiten und Verbesserung der Funktionseigenschaften die Senkung der Investitionskosten die wichtigsten Entwicklungsziele darstellen.

Zur dezentralen Abwasserbehandlung werden in jüngerer Zeit zunehmend Pflanzenkläranlagen eingesetzt, bei denen das Abwasser eine mit speziellen Sumpfpflanzen bepflanzten Bodenkörper durchfließt, wobei chemisch-physikalische und biologische Reinigungsvorgänge ablaufen. Die Abwasserbehandlung erfolgt durch ein Zusammenwirken der speziell ausgewählten Bodenschichten, der Sumpfpflanzen, Mikroorganismen und der in den Bodenschichten vorhandenen Porenluft. Der Bodenkörper ist dabei aus mehreren Bodenschichten aufgebaut, die sich hinsichtlich Material und Körnung voneinander unterscheiden.

Aus der deutschen Gebrauchsmusterschrift DE 299 19 732 U1 ist eine Pflanzenkläranlage mit modularem Aufbau bekannt. Das dort gezeigte Modul zeichnet sich dadurch aus, dass es einen durchströmten bewachsenen Bodenfilter in einem formstabilen Behälter enthält. Dieser Behälter besitzt ein anschlussfertiges integriertes Rinnen- oder Drainagesystem am Behälterboden und ein Verteilersystem an der Oberfläche des Bodenfilters. Damit soll gewährleistet werden, dass eine gleichmäßige Durchströmung im gesamten Bodenfilter erzielt wird. Für den Aufbau einer Pflanzenkläranlage werden mehrere solcher Module zusammengeschaltet. Die Fertigstellung der Pflanzenkläranlage erfolgt beim Einbau im jeweiligen Bodenabschnitt. Außerdem werden Aggregateinheiten, wie Zulauf- und Ablaufpumpen sowie die zugehörigen Steuerelemente angebracht und funktionsfähig mit den Modulen verbunden.

Die DE 198 38 692 A zeigt eine Pflanzenbeetkläranlage für den stationären Einsatz. Diese Pflanzenbeetkläranlage besitzt im Zulaufabschnitt eine Mehrkammergrube, die über einen Verteilerschacht Abwasser in die eigentliche Pflanzenklärstufe einleitet. An die Pflanzenklärstufe schließt sich auf der Abschlussseite ein separater Kontrollschacht an. Diese Pflanzenbeetkläranlage besteht somit aus mindestens vier Volumenkörpern, die separat im Boden eingebracht und während des Einbaus in korrekter Weise miteinander verbunden werden müssen. Diese Anlage eignet sich jedoch lediglich für die Aufbereitung von gering verschmutztem Abwasser, insbesondere von privaten Haushalten, sowie für relativ kleine Abwasservolumina. Zudem wird neben der Abwasseraufbereitung kein weiterer kommerzieller Mehrwert durch die Anlage generiert.

Besondere Anforderungen an die Abwasseraufbereitung stellen Ölförderanlagen, welche erhebliche Mengen an mit Restöl verunreinigtem und mit hohen Salzanteilen versehenes Wasser, sogenanntes "produced water" oder auch Ölförderwasser genannt, erzeugen. Die sichere und umweltfreundliche Entsorgung dieses Ölförderwassers ist ein wesentliches Problem, insbesondere in Ländern in ariden Klimazonen, da dort eine Verunreinigung der knappen Trinkwasserressourcen unbedingt zu vermeiden ist.

Es werden beispielsweise im Sultanat von Oman derzeit etwa 600.000 m³/Tag an Olförderwasser mit einem Ölanteil von 6 - 8% erzeugt, und es wird vorausgesagt, dass dieses Volumen bis zum Jahr 2013 auf 900.000 m³/Tag ansteigen wird. Dieses Wasser ist mit Petroleumölen, Phenolen, Emulsionsmittein und einer großen Vielfalt an Metallionen in variablen Konzentrationen kontaminiert. Es zeigt ferner eine relativ hohe elektrische Leitfähigkeit. Die derzeit durchgeführten Verfahren zur Entsorgung in tiefer liegende Wasserschichten sowie deren Verpressen in das darunter liegende Bodenmaterial erfüllt nicht mehr die stetig steigenden Anforderungen der Umweltschutzbestimmungen. Zudem erfordern diese Maßnahmen hohe Kosten für die Bereitstellung der notwendigen Energie und sind daher sehr unwirtschaftlich. Darüber hinaus gehen auf diese Weise enorme Mengen an potentiell wiederverwendbarem Wasser, welches insbesondere in Wüstengegenden ein kostbares Gut darstellt, zur Bewässerung von landwirtschaftlich genutzten Gebieten oder zur Trinkwasserversorgung der Bevölkerung verloren.

Aus der WO 2009/000845 A geht eine gattungsgemäße Anlage und ein entsprechendes Verfahren zur Behandlung von Ölförderwasser aus einer Ölförderanlage hervor. Das Ölförderwasser wird in einem ÖlWasser-Separator in eine Rohölfraktion und in eine Fraktion verunreinigten Wassers aufgetrennt. Anschließend wird zumindest ein Anteil der Fraktion an verunreinigtem Wasser in ein Bewässerungssystem mit einer Kaskade aus Riedbettbereichen zur biologischen Reinigung und Reduzierung des Rohöl- und Metallanteils zugeführt.

Es liegt der Erfindung die **Aufgabe** zugrunde, eine Anlage und ein Verfahren zur Aufbereitung und Entsorgung von salz- und ölhaltigem Abwasser mit Rückgewinnung von Ölanteilen bereitzustellen, welche kosteneffizient und hinsichtlich der zu behandelnden Mengen besonders flexibel sind.

Die Erfindung löst die Aufgabe durch eine Anlage zur Aufbereitung und Entsorgung von salz- und ölhaltigem Abwasser mit den Merkmalen nach Anspruch 1 sowie durch ein Verfahren zur Aufbereitung und Entsorgung von salz- und ölhaltigem Abwasser mit den Merkmalen nach Anspruch 7. Vorteilhafte Ausgestaltungen der Erfindung sind in den abhängigen Ansprüchen ausgeführt.

Bei der erfindungsgemäßen Anlage ist zumindest ein Absetzbereich zum Aufnehmen des Abwassers und zum Abscheiden von Ölanteilen aus dem Abwasser, zumindest ein sich daran anschließender Riedbettbereich als sog. "Reed bed" oder Schilfbeet bzw. Pflanzenbeet mit Pflanzen zur Aufnahme und zum Abbau von Verunreinigung im Abwasser, ein Modulbeckenbereich mit einer Vielzahl von Nutzungsbecken, wobei ein Nutzungsbecken über Verteileinrichtungen gesteuert mit aufbereitetem Ab•wasser aus dem Riedbettbereich und/oder aus mindestens einem anderen Nutzungsbecken versorgbar ist, und zumindest ein Salinenbereich zur Aufnahme des Restwassers aus dem Modulbeckenbereich und zur Wasserverdunstung und Aufkonzentration von Salz, vorgesehen.

Auf diese Weise können in den jeweiligen Bereichen definiert die verschiedenen Anteile der im Abwasser enthaltenen Fremdstoffe, insbesondere die Restölanteile sowie die gelösten Salzanteile getrennt gewonnen und wirtschaftlich wiederverwertet werden, um einen erheblichen Teil der Kosten, die für den Betrieb und die Instandhaltung der Anlage notwendig sind, zu kompensieren. Darüber hinaus kann im Modulbeckenbereich durch geeignete Verwertung der in dem Abwasser enthaltenen Nährstoffe ein zusätzlicher Mehrwert erzeugt werden, der sogar einen wirtschaftlich profitablen Betrieb der Anlage ermöglicht.

Während des Betriebs der Anlage wird durch die Bepflanzung im Riedbettbereich eine erhebliche Menge an Biomasse erzeugt, die für die Herstellung beispielsweise von Biosprit oder von Cellulose dienen kann. Zudem können Teilbereiche des Riedbettes auch mit Zier-, Energie- oder Futterpflanzen bepflanzt werden, die in regelmäßigen Abständen abgeerntet und anschließend verkauft oder anderweitig verwertet werden können. Entsprechend groß angelegte, mit Grünpflanzen bewachsene Riedbettbereiche können insbesondere in Wüstengebieten auch einen wesentlichen Beitrag zur Begrünung entsprechender Areale leisten und somit die Attraktivität dieser Gebiete für die Bevölkerung sowie Touristen erhöhen.

Eine wesentliche Anforderung an die verwendeten Pflanzenarten ist, dass sie bezüglich des im Abwasser enthaltenen Salzgehaltes eine hohe Toleranz aufweisen. Als Zierpflanzen bieten sich daher insbesondere Mangrovearten, wie Avicennia marina, sowie die Feige (Ficus vasta) und der Ghafbaum (Prosopis cineraria) an. Als Futterpflanzen sind beispielsweise der Christusdorn (Ziziphus spina-christi), welcher essbare Früchte sowie Blattinhaltsstoffe zur Verwendung in Kosmetika liefert, sowie der Mönchspfeffer (Vitex agnus-castus) geeignet, dessen Inhaltsstoffe für medizinische Anwendungen verwendet werden.

Im Salinenbereich können durch die Wasserverdunstung und die Aufkonzentration über die Sättigungskonzentration hinaus werthaltige Salze, zum Beispiel Sulfate, Nitrate, Halogenide etc. ausgefällt und gewonnen werden, um sie einer weiteren Verwertung, beispielsweise zur Herstellung von Düngemitteln, zuzuführen.

Mit der erfindungsgemäßen. Anlage wird ein wesentlicher Anteil der toxischen organischen und anorganischen Verunreinigungen entfernt und parallel dazu eine Reihe von werthaltigen Nebenprodukten gewonnen. Insbesondere wird die Metallkonzentration für Aluminium, Barium, Chrom, Kupfer und Zink um bis zu 80% und diejenige für Eisen, Lithium, Mangan, Blei, Arsen, Cadmium, Cobalt, Molybdän, Nickel, Selen, Kalium und Vanadium um bis zu 40% gesenkt. Für die Gesamtkohlenwasserstoff-Konzentration ergibt sich eine Reduzierung von bis zu 96%.

Die Abbaumechanismen beruhen auf komplexen Wechselwirkungen zwischen Substrat, Makrophyten und den zugehörigen Mikroorganismen. Aerobe Prozesse dominieren in dem System gegenüber den anaeroben Prozessen beim Abbau sowohl der anorganischen wie der organischen Verunreinigungen. Insbesondere die Wechselwirkung zwischen der Bodenmatrix, den Pflanzen und der mikrobiellen Population ist für viele Prozesse des Abbaus von Verunreinigungen verantwortlich. Diese beinhalten insbesondere Phytoextraktion, Phytostabilisierung, Rhizofiltration und Phytovolatisierung. Durch den wirtschaftlichen Ertrag der erhaltenen Nebenprodukte ergibt sich im Vergleich zu anderen Pflanzenkläranlagensystemen eine Anlage, die bei äußerst geringen Kosten betrieben werden beziehungsweise sogar profitable Ergebnisse erzielen kann.

Es ist erfindungsgemäß, wenn der Riedbettbereich mehrere parallel angeordnete Riedbettsegmente aufweist, welche jeweils aus mehreren Riedbettbecken gebildet sind, die in Reihe angeordnet und durchströmt sind.

Auf diese Weise kann die aufzunehmende bzw. überströmte Abwassermenge und somit die Klärleistung deutlich gesteigert und darüber hinaus auch die Ausbeute an werthaltigen Nebenprodukten erhöht werden. Zudem ist es bei den in Reihe angeordneten Riedbettbecken möglich, jeweils definiert einen speziellen Pflanzenbewuchs vorzusehen, der optimal an die jeweils vorliegende Öl- und Salzkonzentration im Abwasser angepasst ist. Der Abwassertransport zwischen den einzelnen Riedbettbecken kann dabei entweder durch einfache Sickerprozesse lateral zwischen den einzelnen Becken oder auch durch zwischen den Becken angeordnete Verteil- und Verbindungskanäle erfolgen. Diese Verbindungskanäle können wiederum mit Ventileinrichtungen ausgestattet sein, um den Durchfluss des Abwassers zu steuern.

Durch den vor dem Riedbettbereich vorgesehenen Absetzbereich zur Aufnahme des Abwassers und zum Abscheiden von Ölanteilen aus dem Abwasser können größere Ölanteile, welche an der Wasseroberfläche adsorbieren, bereits vor dem Eintritt in das Riedbett abgeschieden und so eine übermäßige Belastung des Riedbettbereiches vermieden werden. Die einzelnen Nutzungsbecken des Modulbeckenbereiches können dabei sowohl nachfolgend zu dem Riedbettbereich oder auch parallel hierzu verlaufend angelegt sein. Bei einer parallelen Anordnung der Nutzungsbecken können sich die vorgesehenen Nutzanwendungen an den jeweiligen Salzgehalt des Abwassers definiert orientieren. Auf diese Weise können verschiedene Nutzanwendungen mit jeweils unterschiedlichen Anforderungsprofilen eingesetzt werden.

Neben dem Abbau und der Aufnahme der organischen und anorganischen Verunreinigungen im Abwasser erfolgt im Riedbettbereich auch ein erheblicher Wasserverlust durch Verdunstung, welche bis zu zwei Drittel der Gesamtwassermenge betragen kann. Die Verdunstung im Riedbettbereich erfolgt dabei über die Blattmasse des Pflanzenbewuchses und die Wasseroberfläche. Parallel zu dem mikrobiologischen Abbau der organischen Verunreinigungen und der Aufnahme der Schwermetallkationen im Bodenbereich erfolgt ferner durch die Ultraviolettstrahlung der Sonne eine Spaltung der höhermolekularen Kohlenwasserstoffe, welche an der Wasseroberfläche adsorbiert sind. Durch die Spaltung werden diese Kohlenwasserstoffe in niedermolekulare Verbindungen überführt, welche durch die im Riedbettbereich vorhandene Bodenmatrix leichter aufgenommen und durch die Mikroorganismen abgebaut werden können.

Da im Winter im Allgemeinen die Sonneneinstrahlung geringer ist als im Sommer, können in dieser Periode zusätzliche Beckenbereiche, sogenannte "Winterbecken", zugeschaltet werden, um die geringere Verdunstungsrate in dieser Jahreszeit durch eine erhöhte Anzahl an Becken auszugleichen. Somit kann über das ganze Jahr hindurch eine im Wesentlichen gleichbleibende Abwassermenge gereinigt werden.

Das durch die Verdunstung im Riedbettbereich bereits erheblich aufkonzentrierte Abwasser wird im Salinenbereich durch weitere Verdunstung eingedickt, um die darin gelösten Salze auszufällen und zu gewinnen.

Erfindungsgemäß weist der Absetzbereich entsprechend der Anzahl der Riedbettsegmente mehrere Absetzbecken auf. Ferner ist an dem Absetzbereich ein Verteilerkanal zur Zufuhr und Aufteilung des Abwassers zu den Absetzbecken vorgesehen.

Auf diese Weise wird das Abwasser definiert auf die einzelnen parallel zueinander angeordneten Riedbettsegmente aufgeteilt. Somit können bei gegebenenfalls auftretenden Störungen in einem Segment die parallel angeordneten anderen Segmente davon unbeeinflusst weiter betrieben werden und somit den dauerhaften Betrieb der Anlage gewährleisten.

Im Bereich des Verteilerkanals kann ferner eine Sieb- beziehungsweise eine Zerkleinerungseinrichtung vorgesehen sein, um größere feste Bestandteile vom Eintritt in den Absetzbereich abzuhalten beziehungsweise diese auf die gewünschte Teilchengröße zu zerkleinern. Zudem kann in dem Verteilerkanal durch eine entsprechende Auswahl der Kanalbreite bzw. durch zusätzlich vorgesehene Pump- und Ventileinrichtungen die Strömungsgeschwindigkeit des Abwassers und somit die Zustromrate in den Absetzbereich definiert eingestellt werden. Am Boden des Verteilerkanals kann darüber hinaus eine Sammeleinrichtung vorgesehen sein, welche herabgesunkenes Sedimentmaterial aufnimmt.

Es ist weiter vorteilhaft, wenn zwischen den einzelnen Becken befahrbare Dämme vorgesehen sind.

Auf derartig befestigten Dämmen können Nutzfahrzeuge verkehren, welche beispielsweise zum Abernten von Pflanzenmaterial aus dem Riedbettbereich oder zur Zufuhr von Nährstoffen oder dem Einbringen von weiterem pflanzlichen und mikrobiologischen Material dienen. Insbesondere kann die begeh- oder befahrbare Oberfläche der Dämme durch ein Aufbringen von geeignetem Belagsmaterial, zum Beispiel Asphalt, für das Befahren mit schwereren Nutzfahrzeugen angepasst sein. Mit Hilfe der Nutzfahrzeuge und darauf angebrachten entsprechenden Saugeinrichtungen können auf der Wasseroberfläche absorbierte größere Restölanteile eingesaugt werden. Aber auch andere makroskopische Bestandteile, wie zum Beispiel Pflanzenteile, Blätter, Halmmaterial etc. lassen sich auf diese Weise entfernen. Dadurch werden eventuelle Verstopfungen in angrenzenden Leitungssystemen oder Ventileinrichtungen vermieden. Darüber hinaus können über diese Zufahrtswege auch Messeinrichtungen zur Kontrolle der Abwasserqualität herangeführt werden. Die Dämme sind vorzugsweise aus einem grobkörnigen Material strukturiert, wie zum Beispiel Kies, um ein Durchsickern des Abwassers von einem Beckenbereich in den nächsten zu ermöglichen. Alternativ oder zusätzlich können zum Wassertransport durch die Dämme weitere Drainageleitungen vorgesehen sein. Die Dämme können durch weitere Befestigungseinrichtungen, beispielsweise Pfähle, stabilisiert sein, um ein Abrutschen von Dammmaterial in die angrenzenden Becken zu vermeiden. Erfindungsgemäß sind die Nutzungsbecken des Modulbeckenbereichs zur Zucht von Pflanzen, Algen, Fischen, Shrimps und/oder Mikroorganismen ausgebildet.

Durch diese Kultivierung geeigneter biologischer oder tierischer Kulturen lassen sich hochwertige organische Produkte gewinnen, welche die Kostenbelastung durch den Betrieb der Anlage in erheblichem Maße auffangen beziehungsweise übertreffen können. Die entsprechenden Nutzungsbecken können auch an Dritte verpachtet werden.

Die Nutzungsbecken des Modulbeckenbereiches sind zweckmäßig zwischen dem Riedbettbereich und dem Salinenbereich angeordnet, können aber alternativ auch parallel zu diesen beiden Bereichen vorgesehen sein. Eine Anordnung im Anschluss an den Riedbettbereich hat den Vorteil, dass ein wesentlicher Anteil der organischen Verunreinigungen sowie der Schwermetallkationen bereits entfernt wurde und somit auch sensiblere Pflanzen- und Tierarten in diesen Nutzungsbecken gezüchtet werden können. Insbesondere bei der Zucht von Kulturen, welche für den menschlichen Verzehr vorgesehen sind, ist ein entsprechender niedriger Grad einer Schwermetallbelastung ohnehin notwendig.

Für die Züchtung von Pflanzen- und Tierarten bieten sich eine Reihe von Möglichkeiten an. Bestimmte Algenarten, wie Scenedesmus, Spirulina und dergleichen können zur Herstellung von Pigmenten, wie Carotenoiden oder Chlorophyll, sowie Vitaminen und für die Generierung mehrfach ungesättigter Fettsäuren, insbesondere ω3- und ω6-Fettsäuren, sowie von Proteinen für die Tierfutterindustrie verwendet werden. Neben Salzwasserfischarten ist insbesondere die Kultivierung von Shrimps als hochwertiges Nahrungsmittel vorteilhaft in diesen Nutzungsbecken durchzuführen. In weiter stromabwärtsliegenden, mit einem höheren Salzgehalt versehenen Nutzungsbecken können extrem halophile Mikroorganismen, wie Bakterien, zum Beispiel Halomonas, oder Archebakterien, wie Haloarula, kultiviert werden. Diese Bakterien beziehungsweise Archebakterienarten sind geeignet, um Grundstoffe und Feinchemikalien für bioplastische Stoffe, Etherlipide oder Pigmente für die kosmetische und die Nahrungsmittelindustrie herzustellen.

Da der Salzgehalt aufgrund der Wasserverdunstung in stromabwärtiger Richtung kontinuierlich zunimmt, können in den einzelnen Nutzungsbecken spezifisch auf den jeweiligen Salzgehalt angepasste Pflanzen- und Tierarten eingesetzt werden, so dass eine große Bandbreite von pflanzlichen und tierischen Organismen zur Verwendung kommen kann.

Insbesondere ist auch der Einsatz von Pilzen vorstellbar, welche beispielsweise für die Herstellung von medizinisch verwendbaren Stoffen, wie Antibiotika, dienen können. Im Hinblick auf die durch die Jahreszeiten bedingten, sich ändernden Witterungsbedingungen bieten diese Nutzungsbecken eine hohe Flexibilität hinsichtlich ihrer Verwendung. Um einen Schutz von sehr empfindlichen Spezies zu ermöglichen, können die einzelnen Nutzungsbecken durch entsprechende Abdeckeinrichtungen vor äußeren Einflüssen geschützt werden. Bei Verwendung von aus Glas oder Plexiglas gefertigten Abdeckeinrichtungen lässt sich ein Treibhauseffekt simulieren, welcher insbesondere die Produktivität pflanzlicher Kulturen deutlich erhöht. Zur weiteren Erhöhung der Produktivität kann zusätzlich Kohlendioxid eingespeist werden. Durch regelmäßiges Abernten der gebildeten Produkte ist es auf diese Weise möglich, eine kontinuierliche Gewinnung von werthaltigen Erzeugnissen zu gewährleisten.

Es ist vorteilhaft, wenn die Becken des Absetzbereiches, des Riedbettbereiches, des Modulbeckenbereiches und des Salinenbereiches terrassenartig und in Strömungsrichtung des Abwassers auf abnehmenden Höhenniveaus angeordnet sind.

Auf diese Weise wird eine einfache und ohne zusätzlichen Energieaufwand ablaufende Strömung des Abwassers bewirkt, so dass sich eine sehr energiesparende Betriebsweise der Anlage, ergibt. Durch den terrassenartigen Aufbau wird eine sehr große Oberfläche der einzelnen Bereiche erzeugt, wodurch zum einen eine hohe Verdunstungsrate erreicht werden kann und zum anderen auch bei relativ niedrigen, gut kontrollierbaren Abwasserständen ein hoher Durchsatz zu erzielen ist. Ein einzelnes, terrassenartiges Becken weist dabei geeigneterweise eine Seitenabmessung von einigen hundert Metern, insbesondere von etwa 300 m auf, um eine einfache und zuverlässige Bewirtschaftung zu gewährleisten. Eine in Reihe geschaltete Anordnung von vier solcher terrassenartiger Becken, ein Segment, eines Riedbettbereiches ist dabei in der Lage, im voll ausgebauten Zustand eine Abwassermenge von 1.500 m³/Tag ausreichend zu behandeln. Bei einer parallelen Anordnung von mehreren derartiger Segmente ist es auf diese Weise möglich 3.000 bis 170.000 m³ Abwasser pro Tag durch die Anlage umzusetzen.

Für diese spezifische Anordnung von großflächigen Terrassen auf kontinuierlich abnehmenden Höhenniveaus eignen sich insbesondere Wüstengebiete, wo entsprechende geographische Gegebenheiten häufig anzutreffen sind. In ariden Klimazonen gedeihen die verwendeten Pflanzenkulturen aufgrund der starken Sonneneinstrahlung besonders gut, und die relativ hohen Temperaturen unterstützen zudem den biochemischen Abbau der organischen Verunreinigungen durch angesiedelte Mikroorganismen.

Als vorteilhaftes Gesamtgefälle, um eine ausreichende Gravitationswirkung zum Abwassertransport zu ermöglichen, sind 1 bis 3 %, insbesondere 1,8 %, geeignet. Dabei muss die Steigungsrate nicht gleichmäßig konstant über den ganzen Strömungsverlauf vorliegen, sondern kann sich den geographischen Gegebenheiten beziehungsweise den entsprechenden Erfordernissen in den einzelnen Bereichen anpassen. So kann es vorteilhaft sein, im Riedbettbereich eine höhere Steigungsrate vorzusehen, da hier größere Strömungswiderstände vorliegen als in den sich anschließenden Bereichen. Andererseits ist es jedoch nicht notwendig, sich den örtlichen Gegebenheiten anzupassen, sondern es besteht gegebenenfalls die Möglichkeit, durch entsprechende Aufschüttungen oder Aushübe die natürlich vorgegebene Steigung abzumildern beziehungsweise zu verstärken. Auf diese Weise kann über den gesamten Verlauf der Anlage die Steigungsrate und in Abhängigkeit vom Strömungswiderstand die Strömungsgeschwindigkeit und somit die Verweilzeit des Abwassers in den verschiedenen Bereichen definiert eingestellt werden. Zusätzlich kann vorgesehen sein, um bei sehr niedrigen Steigungen die Strömungsrate des Abwassers zu erhöhen, zwischen den Dämmen zusätzliche Kanäle oder Leitungen anzuordnen.

Erfindungsgemäß sind im Absetzbereich Oberflächenskimmer vorgesehen, mit welchen Öl von der Oberfläche absaugbar und zu Sammelbehältern leitbar ist.

Das aus dem Verteilerkanal in die Absetzbereiche zugeführte Ölförderwasser weist einen schwankenden Restölanteil von wenigen ppm bis in den Prozentbereich auf. Dementsprechend wird sich ein erheblicher Anteil des Restöls an der Oberfläche als Ölfilm niederschlagen. Durch die Oberflächenskimmer kann in relativ kurzer Zeit dieser Oberflächenfilm von der Abwasseroberfläche beseitigt werden, wodurch vermieden wird, dass wesentliche Restölanteile in den Riedbettbereich eintreten und diesen übermäßig belasten.

Das von der Oberfläche abgesaugte Öl wird zu Sammelbehältern geleitet, darin gesammelt und kann in regelmäßigen Abständen zur weiteren Entsorgung oder Weiterverarbeitung abtransportiert werden. Um die Differenz der Oberflächenspannungswerte zwischen dem Restöl und dem Wasser zu erhöhen und dadurch den Anteil des an der Oberfläche adsorbierten Öls zu vergrößern, ist es auch möglich, zusätzlich grenzflächenaktive Stoffe dem Abwasser zuzugeben, welche jedoch ihrerseits leicht biologisch abbaubar sein sollten. Neben dem Ölfilm können durch die Oberflächenskimmer natürlich auch andere Verunreinigungen, wie beispielsweise Laub, Halme und dergleichen aufgenommen werden, welche ansonsten zu Verstopfungseffekten im sich anschließenden Leitungssystem führen können. Die gegebenenfalls zusetzbaren oberflächenaktiven Tenside können separat oder auch parallel zum Absaugvorgang mit den Oberflächenskimmern aufgebracht werden. Um einen möglichst großen Anteil des Restöls an der Oberfläche zurückzugewinnen, ist es bevorzugt, wenn das Abwasser in den Absetzbereichen über einen längeren Zeitraum zurückbehalten wird, bevor es in den Riedbettbereich weitergeleitet wird.

In einer weiter bevorzugten Ausführungsform der erfindungsgemäßen Anlage sind in den einzelnen Bereichen Sensoren zur Messung des Abwasserpegels angeordnet.

Insbesondere im Riedbettbereich ist es für eine ordnungsgemäße Behandlung und Aufrechterhaltung des Pflanzenbewuchses erforderlich, einen Wasserstand von etwa 0 bis 20 cm aufrecht zu erhalten. Bei einem zu hohen Wasserpegel besteht die Gefahr, dass das umgesetzte Wasservolumen zu hoch ist, um den Boden und dem Pflanzenmaterial ausreichend Gelegenheit zur Schadstoffaufnahme beziehungsweise -abbau zu geben. Darüber hinaus ist der Einfluss des UV-Anteils der Sonneneinstrahlung, welcher für die Spaltung höhermolekularer organischer Verbindungen hilfreich ist, in den oberflächennahen Bereichen am größten. Zu einem ordnungsgemäßen Betrieb der Anlage ist es zudem erforderlich, dass das Riedbett nicht über einen längeren Zeitraum trocken liegt, da dies den Bestand der Einpflanzungen gefährden würde. Bei zu geringer Feuchtigkeit im Riedbettbereich kann der Sensor eine Wassereinspeisung sicherstellen, so dass das Riedbeet nicht austrocknet.

Neben den Sensoren für den Wasserstand können auch Sensoren für die Schadstoffkonzentration und/oder andere physikalische oder chemische Parameter des Abwassers vorgesehen sein. Insbesondere weitere Sensoren für den Sauerstoffgehalt; die Wassertrübe, den pH-Wert sowie für die Temperatur sind für eine Kontrolle und Aufrechterhaltung eines ordnungsgemäßen Ablaufs der biologischen Reinigungsmechanismen dienlich.

In einer weiter bevorzugten Ausführungsform der erfindungsgemäßen Anlage weist der Boden des Riedbettbereiches eine untere Dichtschicht zur Abdichtung und eine obere Substratschicht zur Bepflanzung auf, wobei der Riedbettbereich mit Schilfpflanzen, insbesondere Phragmites australis, bepflanzt ist.

Die Dicke der Dichtschicht beziehungsweise der Substratschicht beträgt bevorzugt 10 bis 30 cm, insbesondere 20 cm. Als Dichtschichtmaterialien eignen sich bevorzugt mineralische Materialien wie beispielsweise verdichteter feiner Sand oder Lehm- und Tonmaterialien. Auch Auskleidungen aus Bentonit oder HDPE können geeigneterweise eingesetzt werden. Die Dichtschicht verhindert ein zu rasches Hindurchsickern des Abwassers in das darunterliegende Grundwasser und damit dessen Verunreinigung und verlängert die Verweilzeit im Riedbettbereich. Zudem leisten mineralische Materialien wie Bentonit oder Sand, die reich an verschiedenen Oxiden und Carbonaten sowie silikatischen Bodenmineralien wie Palygorskit und Illit sind, einen wesentlichen Beitrag zur Aufnahme der im Abwasser gelösten Metallkationen.

Die Substratschicht ist bevorzugt aus dem ausgehobenen, aufbereiteten Bodenmaterial und Beimengungen aus einem nährstoffreichen biologischen Material wie Heu, Humus, Torf oder Schlamm gebildet. Diese biologischen Materialien dienen dazu, die mikrobielle Aktivität zu verstärken und damit den mikrobiellen Abbau der organischen Verunreinigungen zu unterstützen. Ferner weist die Substratschicht einen hohen Nährstoffgehalt auf, der ein ordnungsgemäßes Wachstum der darauf vorgesehenen Bepflanzung gewährleistet.

In dieser Matrix kann sich auch eine ausgeprägte Rhizosphäre bilden. Die Rhizosphäre ist bodenökologisch von besonderer Bedeutung, weil hier Boden und Pflanzen interagieren. Die Rhizosphäre wird stark durch Stoffe geprägt, die von der Pflanze abgegeben werden, die sogenannten Exsudate. Sie unterscheidet sich vom umgebenden Boden durch geringere Nährstoff- und Sauerstoffkonzentrationen, da beide Stoffe durch die Pflanze verbraucht werden. Auch der pH-Wert kann sich hier um mehrere Einheiten vom umgebenden Boden unterscheiden. Insbesondere durch die abgegebenen Exsudate und die besseren pH-Wert-Bedingungen zeichnet sich die Rhizosphäre durch eine zumeist wesentlich höhere Organismenbesatzdichte von 5-bis 50-fach aus. Die Rhizosphäre ist ein wichtiger Lebensraum für unterschiedlichste Biozönosen, die vor allem aus Nemathoden, Pilzen, unter anderem Mykorrhiza, und anderen Mikroorganismen bestehen. Der höhere Organismenbesatz führt dazu, dass zusätzliche Nährstoffe für die Pflanze verfügbar gemacht werden, beispielsweise durch Rhizobien oder andere pflanzenwachstumsfördernde Bakterien.

Die auf der Substratschicht vorgesehene Bepflanzung aus Schilfpflanzen, insbesondere Phragmites australis, ist hinsichtlich eines Transfers von Sauerstoff in signifikante Bodentiefen sehr effektiv. Sie weist darüber hinaus eine hohe Produktivität bei der Erzeugung von Biomasse von bis zu 100 t/ha/Jahr auf. Die Art der Phragmites australis wächst sehr schnell und ist in der Lage, sowohl anorganische als auch organische Verunreinigungen aufzunehmen und dabei sowohl einen hohen Salzgehalt des Abwassers als auch extreme Umweltbedingungen zu tolerieren. Sie bildet ferner einen sehr dichten Wuchsbestand, der die Stabilität der darunterliegenden Substratschicht wesentlich unterstützt und zu der Bildung und Entwicklung einer Sedimentschicht beiträgt. Diese Schilfpflanze spielt auch eine wesentliche Rolle bei der Sauerstoffversorgung der Rhizosphäre, einem Prozess, der die Ausfällung von Metallionen verstärkt und den aeroben biologischen Abbauprozess erleichtert. Bereits nach einer Bestandszeit von wenigen Monaten ist die Schilfbepflanzung in ausreichendem Maße entwickelt, um die Abwasserreinigung zu bewirken.

Schilf ist allgemein sehr gut für die Bepflanzung der erfindungsgemäßen Anlage geeignet. Es wirkt durch die große Blattoberfläche und durch die Sauerstoffabgabe hohler, luftführender Stengelteile, sogenannter Aerenchyme, unter Wasser gewässerreinigend, mit einem Sauerstoffeintrag von 5 bis 12 Gramm Sauerstoff/qm pro Tag. Der Sauerstoffeintrag fördert den mikrobiellen Abbau organischer Substanz durch aerophile Bakterien, welche in großer Menge an den Wurzelhaaren des Schilfes siedeln. Auch für die Filterwirkung der Substratschicht ist die Bepflanzung mit Schilf vorteilhaft. Der Schilfbewuchs kann durch sein permanentes Rhizomwachstum das Substrat lockern und so das Kolmationsrisiko senken. Eine intensive Durchwurzelung erhöht die Reinigungsleistung des Bodenfilters, da Sauerstoffeintrag und Wurzelexudate eine Stimulation des mikrobiellen Schadstoffabbaus in der Rhizosphäre bewirken, gleichzeitig werden Nähr- und Schadstoffe der Bodenlösung entzogen.

Eine etablierte Schilffläche transpiriert 800 bis 1.000 Liter Wasser/qm pro Vegetationsperiode, wodurch sich die Sickerwasserbildung im Bodenfilter entsprechend reduziert. Dies begünstigt die Sorption und durch die längere Kontaktzeit auch die Wurzelaufnahme und den biologischen Abbau. Die geschlossene Vegetationsdecke verbessert ferner durch Beschattung und Isolation das bodennahe Mikroklima. Unter abgestorbenem Schilf finden Bakterien selbst im Winter noch Temperaturen um + 5°C vor. Schilfhalme wie auch eine kontinuierliche Streuzufuhr weitmaschiger Vegetationsreste bilden auf dem Boden einen oberirdischen Raumfitter dessen Sedimentationsoberflächen die eigentliche Substratfiltration ergänzen und den Bodenfilter zusätzlich vor äußerer Kolmation schützen.

Der größte Anteil des Abbaus der anorganischen Bestandteile geht auf das Bodenmaterial sowie auf die Makrophyten zurück, die im Wesentlichen die Metalle Aluminium, Barium, Chrom, Kupfer, Zink, Eisen, Lithium, Mangan, Blei, Arsen, Cadmium, Cobalt, Molybdän, Nickel, Selen, Thallium und Vanadium aufnehmen. Das Bodensubstrat kann einen Konzentrationsbereich von 1 bis 1.000 mg an Metall pro kg Bodenmaterial, abhängig von dem Metall, innerhalb des ersten Jahres des Betriebes aufnehmen. Diese Verringerung der Metallionenkonzentration ist durch die Messung der Leitfähigkeit des Abwassers verfolgbar. Die Metalle werden dabei sowohl durch aerobe wie auch anaerobe Prozesse immobilisiert. Insbesondere bei Verwendung von kalkhaltigen Materialien stellen Carbonatmineralien, wie Kalkspat, die dominanten Komponenten des Bodenmaterials dar und beeinflussen im hohen Maß die Metallmobilität. Dies wird durch eine kontinuierliche Lösung der Calciumcarbonate erreicht, welche den alkalischen Grad des Abwassers erhöhen und geeignete Bedingungen für die Metallentfernung oder deren Ausfällung erzeugen. Eine bedeutende Metallaufnahme durch die Makrophyten erfolgt unselektiv insbesondere bei niedrigen Konzentrationen und bei hohen pH-Werten. So kann ein Kilogramm an Makrophyten bis zu 4 g an Metall aufnehmen. Auch die Schilfspezies Phragmites australis weist die Fähigkeit auf, verschiedene Metallsalze aufzunehmen und anzureichern, insbesondere die Salze der Metalle Natrium, Bor und Strontium. Diese Elemente gehören gleichzeitig zu denjenigen, die von der Bodenmatrix am wenigsten absorbiert werden und daher dazu neigen, durch die Verdampfung des Wassers in dem Abwasser aufkonzentriert zu werden und dabei rasch die zulässigen Grenzwerte zu überschreiten. Deren Aufnahme ist daher umso vorteilhafter, da sie sonst einen schädigenden Einfluss auf die in dem nachfolgenden Modulbeckenbereich kultivierten Nutzpflanzen ausüben würden, welche nicht über eine derart große Toleranz gegenüber hohen Metallkonzentrationen und Salzen verfügen.

Auch die organischen Verunreinigungen werden hauptsächlich im Riedbettbereich aufgenommen und abgebaut. Das noch vorhandene Restöl im Wasser wird durch drei Aufnahmemechanismen eliminiert. Die Bodenmatrix selbst hält etwa 15 mg/kg Bodenmaterial zurück. Die Sedimentschicht und darüberliegende Teile der Bepflanzung nehmen das Öl in einer Größenordnung von etwa 40% bezogen auf das Pflanzengewicht auf. Darüber hinaus absorbieren auch die Makrophyten Kohlenwasserstoffe in einer Menge von etwa 10 mg/kg. Somit agieren das wachsende Schilfmaterial und eine gut entwickelte Sedimentschicht als effiziente Filter, welche einen Großteil der Kohlenwasserstoffe binden. Die Kohlenwasserstoffe werden somit daran gehindert, in die mineralische Bodenmatrix einzutreten, wodurch ihre rasche Verteilung und Umsetzung durch verschiedene biotische und abiotische Prozesse erleichtert wird. Dies bedeutet, dass die durch die Sedimentschicht und das Schilfmaterial zurückgehaltenen Kohlenwasserstoffe einem aktiven aerobischen biologischen Abbau sowie zusätzlichen Verwitterungsprozessen, wie der Photooxidation, unterworfen werden.

Das Schilfmaterial nimmt die Kohlenwasserstoffverbindungen durch verschiedene Stoffwechselwege innerhalb der Pflanzen auf, formt diese um und mineralisiert sie durch Phytodegradation, die der von anderen phytoremidiativen Pflanzen ähnlich ist, in weniger toxische Substanzen. Die Schilfpflanzen liefern auch einen bedeutenden Beitrag zur Verdampfung der Kohlenwasserstoffe, insbesondere der niedermolekularen Verbindungen durch ihre hohen Verdampfungsraten, der sogenannten "Phytovolatilisierung". Dieser Prozess ist insbesondere unter warmen klimatischen Bedingungen, insbesondere in Wüstengebieten, sehr ausgeprägt. Ferner leisten auch die an den Wurzelbereichen angelagerten Bakterien einen wesentlichen Anteil zur Metabolisierung organischer Verunreinigungen, da die Wurzeln eine ideale Umgebung für die dazugehörigen Bakterien darstellen, welche sie mit verschiedenen Substraten, Wasser, Sauerstoff und anderen Nährstoffen versorgen. Der hohe Einstrom an organischem Material und einfachen Substraten, die Anwesenheit von Stickstoff-, Phosphor- und Kaliumsalzen sowie einfacher Kohlenwasserstoffe bei warmen Temperaturen sind ideale Bedingungen für die bakteriellen Populationen.

Gegenstand der Erfindung ist auch ein Verfahren zur Aufbereitung und Entsorgung von salz- und ölhaltigem Abwasser, insbesondere mit der erfindungsgemäßen Anlage, wobei das Abwasser nachfolgend einen Absetzbereich zum Aufnehmen des Abwassers und zum Abscheiden von Ölanteilen aus dem Abwasser, zumindest einen sich daran anschließenden Riedbettbereich mit Pflanzen zur Aufnahme und zum Abbau von Verunreinigungen im Abwasser, zumindest einen Modulbeckenbereich mit einer Vielzahl von Nutzungsbecken, wobei ein Nutzungsbecken über Verteileinrichtungen gesteuert mit aufbereitetem Abwasser aus dem Riedbettbereich und/oder aus mindestens einem anderen Nutzungsbecken versorgbar ist, und zumindest einen Salinenbereich zur Aufnahme des Restwassers aus dem Modulbeckenbereich und zur Wasserverdunstung und Aufkonzentration von Salz durchströmt.

Mit dem erfindungsgemäßen Verfahren kann auf eine ökologische Weise eine große Menge Abwasser gereinigt und zur Wiederverwendung in den Wasserkreislauf zurückgeführt sowie gleichzeitig hochwertige pflanzliche, tierische und mineralische Produkte gewonnen werden. Durch die Ausnutzung eines Gefälles und der damit verbundenen Gravitationswirkung zum Strömungstransport des Abwassers kann das Verfahren bei sehr geringem Energieaufwand betrieben werden. Bei einem Betrieb in Wüstengebieten entfällt zudem der Energieaufwand für die Wasserverdunstung. In Verbindung mit dem durch die in den Nutzungsbecken erhaltenen Produkte und deren Erlös ergibt sich insgesamt eine äußerst positive energetische und wirtschaftliche Gesamtbilanz des Verfahrens.

Eine hohe Flexibilität bezüglich der wirtschaftlichen Verwertung bieten insbesondere die einzelnen Nutzungsbecken des Modulbeckenbereiches, welche jeweils bei unterschiedlichster Verwendung, die variierbar ist, mit Teilen des Abwasserstromes versorgt werden. Somit können in Abhängigkeit von den Marktbedingungen spezifisch angepasste Produktpaletten bereitgestellt werden.

Das erfindungsgemäße Verfahren liefert durch die Kombination von biologischen Abbaumechanismen mit Speicherkapazitäten im Boden sowie im darüber bepflanzten Bereich mit den darin angesiedelten Populationen von Mikroorganismen, Bakterien und Algen eine effiziente Möglichkeit, in hohem Maß Schwermetalle und organische Verunreinigungen aus dem Abwasser zu entfernen, und damit zu verhindern, dass diese Schadstoffe in die Umwelt oder in den Nahrungsmittelkreislauf gelangen. So kann die Öl-in-Wasser-Konzentration von ausgehend 200 bis 300 ppm auf eine Endkonzentration des Öls von 0 bis 3 ppm reduziert werden. Der Salzgehalt wird gleichzeitig von 6.000 bis 8.000 ppm auf etwa 20.000 bis 25.000 ppm erhöht. Die Schwermetallkonzentration wird zumindest soweit reduziert, dass sie für Bewässerungsstandards ausreicht. Insbesondere das sehr schädliche Element Bor wird von einem Anfangsgehalt von 4 bis 7 ppm auf einen Endwert von weniger als 3 ppm gedrückt.

Auch die im Riedbettbereich vorgesehene Bepflanzung kann für wirtschaftliche Zwecke genutzt werden. Es lassen sich daher beispielsweise Futtermittelpflanzen wie Chloris gayana und Cenchrus ciliaris oder Zierpflanzen wie Prosopis cineraria, Salvadora persica oder Ipomoa pes-caprae einsetzen. Diese Pflanzenarten weisen eine gewisse Toleranz gegenüber dem Salzgehalt des Bodenwassers auf. Ferner ist es vorstellbar, Pflanzen mit werthaltigen Naturstoffen, wie zum Beispiel Eukalyptus oder Jojoba, die in der kosmetischen Industrie Verwendung finden, einzusetzen. Die Aberntung der entsprechenden Nutzpflanzen kann durch die auf den befahrbaren Dämmen bewegten Nutzfahrzeuge und/oder -geräte erfolgen. Die Gewinnung der in dem Abwasser enthaltenen Mineralsalze erfolgt in dem anschließenden Salinenbereich durch Verdampfung des Restwassers, die durch Versprüheinrichtungen, wie Sprinkler, weiter beschleunigt werden kann. Dieses Verfahren bietet sich insbesondere in Gebieten mit einem sehr trockenen Klima an.

Es ist weiter bevorzugt, wenn die Abwasserzufuhr in den Riedbettbereich gesteuert wird, so dass innerhalb einer Substratschicht mit den Wurzeln der Bepflanzung eine definierte Strömung, insbesondere eine laminare Überströmung der Bodenoberfläche, gegeben ist.

Neben dieser laminaren Oberflächenströmung besteht ein weiteres Wasserströmungsregime unterhalb der Oberfläche, wo der Boden des Riedbettes mit dem Abwasser gesättigt ist, solange sich der Wasserpegel gerade oberhalb der Bodenoberfläche befindet. Der Wasserstand beträgt geeigneterweise 0 bis 20 cm. Eine kurzfristige Anhebung des Wasserpegels ist zweckmäßig, um eventuell gebildete Salzankrustungen an den Pflanzen wegzuspülen. Um eine optimale Bewässerung bei gleichzeitigem Abbau der Schadstoffe zu gewährleisten, ist typischerweise eine Abwasserzufuhr von etwa 0,05 m³/m² Bodenoberfläche pro Tag geeignet, welche bei vollständigem Bewuchs der Riedbettoberfläche allmählich auf das vier- bis fünffache dieses Wertes ansteigen kann.

Innerhalb jedes einzelnen Riedbettes wird das Abwasser oberhalb der zwischen den einzelnen Riedbettbecken vorgesehenen Gräben, die vorzugsweise Kiesmaterial enthalten, zugeführt und sickert dann auf den Boden des Beckenbereiches. Sobald die Kiesgräben mit Wasser gesättigt sind, beginnt das Wasser lateral hindurchzusikkern, um den darunterliegenden Beckenbereich zu erreichen.

Mittels in den einzelnen Bereichen angeordneten Wasserstandssensoren wird die Einhaltung des notwendigen Wasserpegels überwacht. Mit Hilfe einer Steuereinrichtung wird die Abwasserzufuhr in den Verteilerkanal oder eine weitere externe Zufuhr von Abwasser in einzelne Riedbettbecken gesteuert, so dass ein ausreichender Wasserstand bei gleichzeitiger laminarer Überströmung mit einem zusätzlichen Strömungsregime unter der Bodenoberfläche vorliegt. Darüber hinaus kann die Steuerung der Strömungsrate des Abwassers durch weitere Steuereinheiten und Ventileinrichtungen, die in den Leitungen, welche die einzelnen Becken verbinden, vorgesehen sind, erfolgen. Neben dem Wasserstand sind weitere wesentliche Parameter die für eine Steuerung der Abwasserzufuhr notwendig ist, die Schadstoffkonzentration, sowie die Trübe und der Salzgehalt des Abwassers. Um diese physikalisch-chemischen Parameter zu erfassen, ist der Einsatz von Sensoren vorteilhaft. So kann bei einer noch zu hohen Schadstoffkonzentration durch Reduzierung der Abwasserzufuhr die Verweilzeit des Abwasserfluidelemente erhöht werden, um dem Ökosystem mehr Zeit zum weiteren Abbau der Verunreinigung zur Verfügung zu stellen.

Es ist weiter vorteilhaft, wenn das Abwasser in den einzelnen Bereichen, insbesondere im Riedbettbereich, belüftet und/oder erwärmt wird.

Einen großen Beitrag zum Abbau der Verunreinigungen liefern aerobe Prozesse, welche Sauerstoff benötigen. Um die Geschwindigkeit dieser Prozesse zu erhöhen, kann in das Abwassersystem zusätzlich Sauerstoff oder Luft eingeleitet werden. Der zusätzliche Sauerstoff sorgt dafür, dass die Oxidationsvorgänge, welche für den Abbau insbesondere der organischen Moleküle verantwortlich sind, rascher ablaufen. Zudem wird dadurch das Wachstum der aeroben Bakterien nachhaltig angeregt. Die Belüftung erfolgt vorteilhafterweise an mehreren Stellen gleichzeitig und kann durch Mischeinrichtungen, welche die Vermischung des mit Sauerstoff angereicherten Wasser bewirken, unterstützt werden. Bevorzugt wird die Luft im Bodenbereich oder an anderer Stelle großer Wassertiefe eingespeist, da dort der Sauerstoffgehalt im Gegensatz zum oberflächennahen Wasser am geringsten ist. Beim Einsatz des erfindungsgemäßen Verfahrens in kälteren Gebieten oder witterungsbedingt in kälteren Witterungsperioden mit geringerer Sonneneinstrahlung und niedriger Lufttemperatur ist es vorteilhaft, wenn das Abwasser zusätzlich erwärmt wird. Dadurch können die biochemischen Metabolisierungen der Verunreinigungen beschleunigt werden. Zudem wird auf diese Weise die Verdunstungsrate des Abwassers erhöht.

Geeigneterweise wird die zugeführte Wärmeenergie durch Medien mit hoher spezifischer Wärmekapazität, wie Wasser, zugeführt. Auch eine Kombination der Zufuhr von Sauerstoff beziehungsweise Luft gemeinsam mit thermischer Energie ist geeignet. Neben der externen Zufuhr der Wärmeenergie durch Fluide können auch spezifische Wärmeeinrichtungen vorgesehen sein, welche das Abwasser in den einzelnen Becken lokal erwärmen. Die Verteilung des erwärmten Wassers kann durch zusätzliche Mischeinrichtungen unterstützt werden.

Es ist weiter geeignet, wenn in das Abwasser Nährstoffe und/oder biologische Kulturen, insbesondere Mikroorganismen, Bakterien, Algen oder Pilze eingespeist werden.

Durch die Einspeisung zusätzlicher Nährstoffe wird das Pflanzenwachstum, insbesondere im Riedbettbereich, aber auch das Gedeihen der Mikroorganismenkulturen gefördert. Bei einem gesunden Bestand an pflanzlichem und tierischem Material, sowohl oberhalb als auch unterhalb der Bodenoberfläche der Becken, ergibt sich eine höhere Aufnahme und Abbaurate der Verunreinigungen. Die zusätzliche Einspeisung von Bakterien, Algen oder Pilzen ist sowohl für den Schadstoffabbau im Riedbettbereich als auch für die Erzeugung von höherwertigen Naturstoffen im Modulbeckenbereich unterstützend. Um eine Überversorgung mit Nährstoffen und/oder biologischen Kulturen zu vermeiden, ist es vorteilhaft, in den einzelnen Bereichen entsprechende Sensoren vorzusehen, welche den Nährstoffgehalt durch chemischanalytische Verfahren und den Organismenbestand durch Trübungsmessung ermitteln. Da die einzelnen Bereiche jeweils unterschiedliche Anforderungen und verschiedene Funktionalitäten erfüllen, erfolgt die Nährstoff- oder Mikroorganismenzufuhr definiert lokal in den dafür vorgesehenen Beckenzonen. Die Zufuhr kann über spezielle Leitungssysteme erfolgen, welche stationär angebracht sind, oder auch über die Nutzfahrzeuge, welche auf den Dämmen verkehren. Als Nährstoffe bieten sich insbesondere Mineralsalze für die pflanzlichen Bestände sowie Proteine für die tierischen Populationen an.

Erfindungsgemäß werden im Modulbeckenbereich nutzbringende Tiere, Pflanzen und/oder Mikroorganismen kultiviert.

In Abhängigkeit vom Salzgehalt des Abwassers können verschiedene Fisch- und Shrimpsarten kultiviert werden. Spezifische Algenarten sind zur Herstellung von Pigmenten, Vitaminen und mehrfach ungesättigten Fettsäuren sowie Proteinen geeignet. In extrem salzhaltigen Abwasserbereichen ist die Kultivierung von Bakterien und Archebakterien möglich. Diese können zur Herstellung von Polyhydroxyalkanoaten, Etherlipiden, Pigmenten und Hydrogelen dienen. Derartige Feinchemikalien werden in der kosmetischen und Nahrungsmittelindustrie verwendet. Mit diesen hochwertigen Produkten kann durch das erfindungsgemäße Verfahren ein erheblicher Teil der für den Betrieb der Anlage erforderlichen Kosten amortisiert werden.

Die Erfindung wird nachfolgend anhand von schematischen Ausführungsbeispielen unter Bezugnahme auf die Zeichnungen noch näher erläutert. Gleiche Bezugszeichen bezeichnen dabei gleiche Elemente.

Es zeigen:
- Fig. 1: eine Aufsicht auf die erfindungsgemäße Anlage;
- Fig. 2: einen Querschnitt in Längsrichtung der erfindungsgemäßen Anlage; und
- Fig. 3: eine schematische Darstellung des Steuerungs- und Regelungssystems der erfindungsgemäßen Anlage.

Es sind verschiedene Ausführungsformen der erfindungsgemäßen Anlage denkbar. Im Folgenden wird eine bevorzugte Ausführungsform beschrieben.

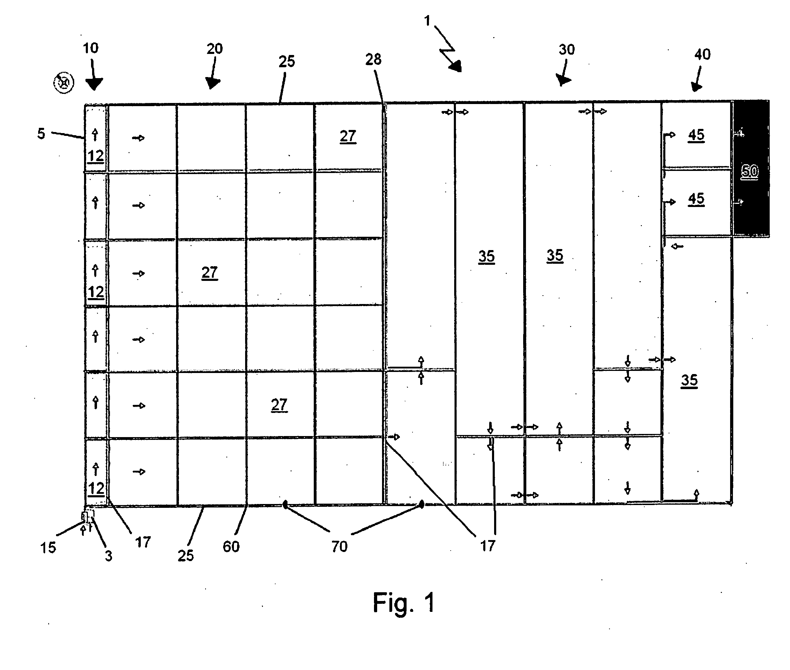

In der in Fig. 1 gezeigten Ausführungsform wird das Abwasser über eine Abwasserzufuhrleitung 3 in den Verteilerkanal 5 eingefettet. Der Verteilerkanal 5 weist eine Breite von einigen Metern und eine Länge von etwa 2 km auf. Vor der Einleitung in den Verteilerkanal 5 durchläuft das Abwasser eine Steuereinrichtung 15, welche die Zuflussrate des Abwassers in den Verteilerkanal 5 und somit in die gesamte Anlage 1 steuert. Die Steuereinrichtung 15 ist mit Sensoren 70 zur Messung des Wasserstandes, des Öl-in-Wasser-Gehaltes sowie der Strömungsgeschwindigkeit des Abwassers in den einzelnen Bereichen 10, 20, 30 und 40 verbunden. Der Verteilerkanal 5 verteilt das Abwasser gleichmäßig auf sechs nebeneinander angeordnete Absetzbecken 12 mit einer Breite von etwa 100 m und einer Länge von etwa 300 m. Diese Absetzbecken 12 bilden in ihrer Gesamtheit den Absetzbereich 10. In dem Absetzbereich 10 wird die Strömungsgeschwindigkeit des Abwassers erniedrigt und somit dem in dem Wasser vorliegenden Restöl Gelegenheit gegeben, sich an der Abwasseroberfläche zu absorbieren. Die absorbierten Restölanteile werden mittels einer Skimmereinheit 92 von der Oberfläche abgesaugt. Das abgesaugte Restöl wird in einem Ölsammelcontainer 93 gesammelt, der in regelmäßigen Abständen entleert wird. Dieses Restöl kann zur Reinigung oder Verarbeitung abtransportiert werden. Die sechs parallel angeordneten Absetzbecken 12 bilden den Ausgangspunkt für die sich daran anschließenden sechs Riedbettsegmente 25, welche den Riedbettbereich 20 bilden, und ihrerseits in vier gleich große terrassenartige Riedbettbecken 27 aufgeteilt sind. Ein einzelnes Riedbettbecken 27 weist Abmessungen von etwa 300 m in der Länge und der Breite auf. Zur Untergliederung in die einzelnen Segmente 25 und Becken 12, 27, 35, 45, 50 sind Dämme 60 vorgesehen, die soweit befestigt sind, dass deren Begehung und/oder Befahrung durch Nutzfahrzeuge möglich ist. Nach einer ausreichenden Verweilzeit des Abwassers in dem Absetzbereich 10 wird das Abwasser über Verteileinrichtungen, welche als Verbindungskanäle 17 ausgebildet sind, die zwischen dem Absetzbereich 10 und dem Riedbettbereich 20 vorgesehen sind, auf die parallel angeordneten Riedbettsegmente 25 gleichmäßig aufgeteilt und weitergeleitet. Die Verbindungskanäle 17 sind mit Ventileinrichtungen 83 versehen, um die Einspeisungsrate des Abwassers in den Riedbettbereich 20 zu steuern. Die Ventileinrichtungen 83 der Verbindungskanäle 17 sind mit der Steuereinrichtung 15 verbunden, so dass die Strömungsrate insbesondere in Abhängigkeit von den jeweiligen Wasserstandspegeln gesteuert werden kann.

Die Riedbettbecken 27 sind mit Schilf der Gattung Phragmites australis bepflanzt, die auf einer Substratschicht von etwa 20 cm verwurzelt sind. Unterhalb dieser Substratschicht ist eine etwa 20 cm dicke Dichtschicht vorgesehen, welche aus feinem verdichtetem Sand oder Laborit besteht. Durch diese Bodenschichten erfolgt eine Aufnahme und Bindung der Schwermetallionen, während die Schilfbepflanzung sowie die angesiedelten Bakterienkulturen die organischen Verunreinigungen des Abwassers metabolisieren. Auf den zwischen den Riedbettbecken 27 angeordneten Dämmen 60 verkehren Nutzfahrzeuge, welche für die Pflege der Schilfbepflanzung und für die Wartung der im Riedbettbereich angeordneten technischen Einrichtungen, insbesondere der Sensoren 70 und der Verbindungskanäle 17, bereitgestellt werden. Die einzelnen Riedbettbecken 27 eines Riedbettsegmentes 25 weisen in Strömungsrichtung ein abnehmendes Höhenniveau auf, so dass das Abwasser lediglich durch die Gravitationswirkung angetrieben von einem Riedbettbecken 27 in das darunterliegende strömt. Neben dem Abbau und der Aufnahme der Verunreinigungen erfolgt im Riedbettbereich 20 auch eine wesentliche Wasserverdunstung und Eindickung des Abwassers. Diese Verdunstung erfolgt dabei sowohl über die große freie Wasseroberfläche als auch über die Blattmasse des Schiffmaterials.

Nach dem Durchlaufen des Riedbettbereiches 20 wird das gereinigte Abwasser in einem Sammelkanal 28 zusammengeführt. In diesem Sammelkanal 28 sind weitere Sensoren 70 vorgesehen, welche insbesondere den Reinigungsgrad des Abwassers überprüfen. Bei einer noch zu großen Schadstoffbelastung ist vorgesehen, dieses Abwasser wieder in den Anfangsbereich des Riedbettbereiches 20 zur weiteren Reinigung zurückzuführen. Als ausreichend unbelastet angesehenes Abwasser wird nachfolgend in den Modulbeckenbereich 30 weitergeleitet, der seinerseits in einzelnen Nutzungsbecken 35 aufgeteilt ist. Auch diese Nutzungsbecken 35 sind durch Dämme 60 voneinander unterteilt. In den Nutzungsbecken 35 werden verschiedene pflanzliche und tierische Nutzkulturen kultiviert. Da in Strömungsrichtung eine weitere Verdunstung und somit ein Anstieg des Salzgehaltes des Abwassers vorliegt, sind die relativ salzärmeren Nutzungsbecken 35, insbesondere für tierische Arten, wie Fische und Shrimps, vorgesehen, während die salzreicheren Nutzungsbecken 35 den salzresistenteren weniger komplexen Lebensformen, wie Algen, Pilzen oder Bakterien und anderen Mikroorganismen vorbehalten sind.

Über die befahrbaren Dämme 60 können im Modulbeckenbereich 30 den darin angesiedelten Nutzkulturen Nährstoffe zugeführt werden oder sich gebildete Verunreinigungen entfernt werden. Zwischen den einzelnen Nutzungsbecken 35 sind ebenfalls Verbindungskanäle 17 mit Ventileinrichtungen 83 vorgesehen, die als Verteileinrichtungen fungieren, um die Strömungsgeschwindigkeit des Abwassers durch die einzelnen Nutzungsbecken 35 und somit die Verweilzeit zu steuern. Auf diese Weise kann in jedem einzelnen Nutzungsbecken 35 für die jeweilige dort angesiedelte Pflanzen- oder Tierart ein optimaler Salzgehalt eingestellt werden. Die einzelnen Nutzungsbecken 35 weisen dabei ferner unterschiedliche Abmessungen auf, um je nach Marktlage eine geeignete Menge an tierischen oder pflanzlichen Produkten erzeugen zu können. Nach dem Modulbeckenbereich 30 tritt das Abwasser in den Salinenbereich 40 ein, der aus zwei parallel angeordneten Salinenbecken 45 besteht. In dem Salinenbereich 40 wird das Wasser durch die Sonneneinstrahlung sowie gegebenenfalls durch weitere Heizeinrichtungen verdampft, so dass die darin gelösten Salze allmählich ausfallen und schließlich im Deponiebecken 50, das sich an den Salinenbereich 40 anschließt, gewonnen werden können.

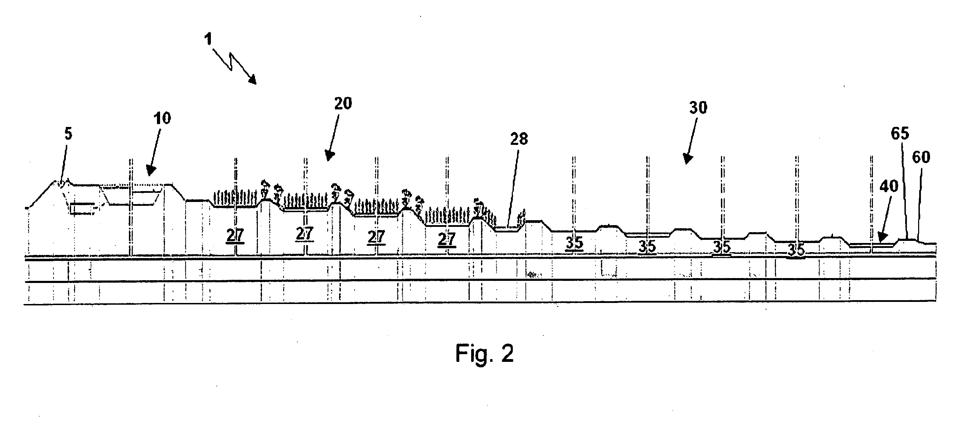

Der in Fig. 2 gezeigte Querschnitt in Strömungsrichtung der erfindungsgemäßen Anlage lässt die abgestufte Anordnung der einzelnen Bereiche 10, 20, 30, 40 und der jeweiligen einzelnen Becken 12, 27, 35, 45, 50 deutlich erkennen. Das Abwasser wird am höchsten Punkt der Anlage 1, am Verteilerkanal 5 in die Anlage 1 eingespeist und durchläuft von dort aus nacheinander den Absetzbereich 10, anschließend den Riedbettbereich 20 mit vier in Reihe angeordneten Riedbettbecken 27. Nach dem Durchlaufen des Riedbettbereiches 20 wird das Abwasser in einem Sammelkanal 28 gesammelt, um nachfolgend in den Modulbeckenbereich 30 mit vier in Reihe angeordneten Nutzungsbecken 35 zur Nutzung von Tier- oder Pflanzenkulturen geleitet zu werden, und schließlich zur endgültigen Verdampfung des Restwassers sowie zur Gewinnung der enthaltenen Mineralsalze in den Salinenbereich 40 überführt zu werden. Die einzelnen Bereiche 10, 20, 30, 40 und Becken 12, 27, 35, 45, 50 sind untereinander durch Dämme 60, auf denen eine befestigte Straße 65 vorgesehen ist, abgetrennt.

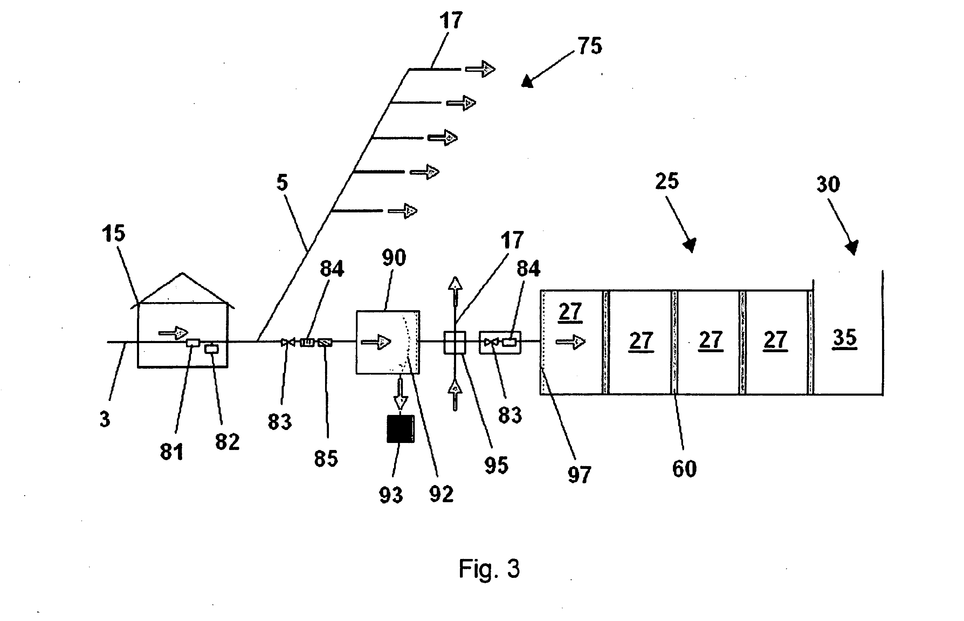

In Fig. 3 ist das Steuerungs- und Regelungssystem der erfindungsgemäßen Anlage im Überblick dargestellt. Das Abwasser wird über eine Abwasserzufuhrleitung 3 zunächst zu einer Steuereinrichtung 15 geführt. Die Steuereinrichtung 15 weist sowohl einen Strömungsmesser 80 zur Messung der Strömungsgeschwindigkeit des Abwassers wie auch ein Messgerät 82 zur Messung des Restölanteils im Abwasser auf. Nach dem Durchlaufen der Steuereinrichtung 15 strömt das Abwasser in den Verteilkanal 5 und wird von dort über Verbindungs-/Verteilungskanäle 17 auf sechs parallel angeordnete Strömungszüge 75 aufgeteilt. Zu Beginn eines jeden Strömungszuges 75 ist ein Ventil 83 und ein Strömungsregler 84 mit einer eigenen Stromversorgung 85 vorgesehen. Mittels des Ventiles 83 und des Strömungsreglers 84 kann die Strömungsrate des Abwassers an die jeweiligen Anforderungen geeignet angepasst werden. Nach dem Einstellen der Strömungsrate tritt das Abwasser in eine ÖlWasser-Trenneinheit 90 ein, welche eine Skimmereinheit 92 aufweist, die auf der Wasseroberfläche adsorbierte Restölanteile aufnimmt und in eine Ölsammeleinheit 93 überführt. Nach dem Abtrennen der adsorbierten Restölanteile tritt das Abwasser in eine Verteileinheit 95 ein. Die Verteileinheit 95 ist mit Verbindungs/Verteilungskanälen 17 verbunden, welche eine Verteilung des Abwassers zwischen den parallel angeordneten Strömungszügen 75 sowie eine externe Einspeisung von zusätzlichem Abwasser, Nährstoffen usw. erlauben. Nach dem Durchlaufen der Verteileinheit 95 wird die Strömungsrate des Abwassers über ein weiteres Ventil 83 und einen Strömungsregler 84 neu eingestellt, um in ein Riedbettsegment 25 einzutreten. Das Riedbettsegment 25 besteht aus vier in Reihe angeordneten Riedbettbecken 27, die mit der Schilfpflanze Phragmites australis bepflanzt sind. Die einzelnen Riedbettbecken 27 sind durch Dämme 60 voneinander unterteilt, wobei die einzelnen Dämme 60 ferner eine Überlaufleitung (nicht gezeigt) aufweisen, um überschüssiges Abwasser abfließen zu lassen. Die Überlaufleitungen sind mit einer Wasserpegeleinstelleinheit 97 verbunden, welche am Beginn des Riedbettsegmentes 25 angeordnet ist und einen geeigneten Wasserpegel des Abwassers einstellt. Nach dem Riedbettsegment 25 tritt das Abwasser in ein Nutzungsbecken 35 am Beginn des Modulbekkenbereiches 30 ein.

## Patentansprüche

1. Anlage zur Aufbereitung und Entsorgung von salz- und ölhaltigem Abwasser, insbesondere Olförderwasser, mit
- einer Zuführleitung (3) zur Zuführung des Abwassers,
- zumindest einem Riedbettbereich (20) mit Pflanzen zur Aufnahme und zum Abbau von Verunreinigungen im Abwasser,
- zumindest einem Modulbeckenbereich (30) mit einer Vielzahl von Nutzungsbecken (35), die zur Zucht von Pflanzen, Algen, Tieren, Fischen, Shrimps und/oder Mikroorganismen ausgebildet sind, wobei ein Nutzungsbecken (35) über Verteileinrichtungen (17) gesteuert mit aufbereitetem Abwasser aus dem Riedbettbereich (20) und/oder aus mindestens einem anderen Nutzungsbecken (35) versorgbar ist, und
- zumindest einem Salinenbereich (40) zur Aufnahme des Restwassers aus dem Modulbeckenbereich (30) zur Wasserverdunstung und Aufkonzentration von Salz,
**dadurch gekennzeichnet**
- **dass** der Riedbettbereich (20) mehrere parallel angeordnete Riedbettsegmente (25) aufweist, welche jeweils aus mehreren Riedbettbecken (27) gebildet sind, die in Reihe angeordnet und durchströmt sind,
- **dass** zwischen der Zuführleitung (3) und dem Riedbettbereich (20) ein Absetzbereich (10) zum Aufnehmen des Abwassers vorgesehen ist, in welchem sich zum Abscheiden von Ölanteilen eine Strömungsgeschwindigkeit des Abwassers erniedrigt,
- **dass** der Absetzbereich (10) entsprechend der Anzahl der Riedbettsegmente (25) mehrere Absetzbecken (12) aufweist, und
- **dass** an dem Absetzbereich (10) ein Verteilerkanal (5) zur Zufuhr und Aufteilung des Abwassers zu den Absetzbecken (12) vorgesehen ist,
- **dass** im Absetzbereich (10) mit den mehreren Absetzbecken (12) zur Rückgewinnung von Restöl Oberflächenskimmer vorgesehen sind, mit welchen Öl von der Oberfläche absaugbar und zu Sammelbehältern leitbar ist.

2. Anlage nach Anspruch 1 ,
**dadurch gekennzeichnet,**
**dass** zwischen den einzelnen Bereichen (10, 20, 30, 40) befahrbare Dämme (60) vorgesehen sind.

3. Anlage nach Anspruch 1 oder 2,
**dadurch gekennzeichnet,**
**dass** der Absetzbereich (10), der Riedbettbereich (20) der Modulbeckenbereich (30) und der Salinenbereich (40) mit ihren Becken (12, 27, 35, 45) terrassenartig und in Strömungsrichtung des Abwassers auf abnehmenden Höhenniveaus angeordnet sind.

4. Anlage nach einem der Ansprüche 1 bis 3,
**dadurch gekennzeichnet,**
**dass** die Strömung des Abwassers durch die Anlage (1) mittels Gravitation bewirkt ist.

5. Anlage nach einem der Ansprüche 1 bis 4,
**dadurch gekennzeichnet,**
**dass** eine Steuereinrichtung (15) mit Sensoren (70) zum Messen und Einstellen von chemisch-physikalischen Parametern des Abwassers vorgesehen ist.

6. Anlage nach einem der Ansprüche 1 bis 5,
**dadurch gekennzeichnet,**
**dass** der Boden des Riedbettbereiches (20) eine untere Dichtschicht zur Abdichtung und eine obere Substratschicht zur Bepflanzung aufweist, und dass der Riedbettbereich (20) mit Schilfpflanzen, insbesondere mit Phragmites australis, bepflanzt ist.

7. Verfahren zur Aufbereitung und Entsorgung von salz- und ölhaltigem Abwasser, insbesondere mit einer Anlage nach einem der Ansprüche 1 bis 6, wobei das Abwasser nachfolgend
- zumindest einen Riedbettbereich (20) mit Pflanzen zur Aufnahme und zum Abbau von Verunreinigungen im Abwasser,
- zumindest einen Modulbeckenbereich (30) mit einer Vielzahl von Nutzungsbecken (35), wobei ein Nutzungsbecken (35), in dem nutzbringende Tiere, Pflanzen und/oder Mikroorganismen kultiviert werden, über Verteileinrichtungen (17) gesteuert mit aufbereitetem Abwasser aus dem Riedbettbereich (20) und/oder aus mindestens einem anderen Nutzungsbecken (35) versorgt wird, und
- zumindest einen Salinenbereich (40) zur Aufnahme des Restwassers aus dem Modulbeckenbereich (30) und zur Wasserverdunstung und Aufkonzentration von Salz durchströmt,
**dadurch gekennzeichnet,**
- **dass** mehrere parallel angeordnete Riedbettsegmente (25) des Riedbettbereichs (20), welche jeweils aus mehreren in Reihe angeordneten Riedbettbecken (27) gebildet werden, durchströmt werden, und
- **dass** das Abwasser in zumindest einem Absetzbereich (10), an den sich der Riedbettbereich (20) anschließt, aufgenommen wird, in welchem zum Abscheiden von Ölanteilen eine Strömungsgeschwindigkeit des Abwassers erniedrigt wird, wobei
- an dem Absetzbereich (10) ein Verteilerkanal (5) zur Zufuhr und Aufteilung des Abwassers zu den Absetzbecken (12) vorgesehen ist,
und
- **dass** im Absetzbereich (10) entsprechend der Anzahl der Riedbettsegmente (25) mehrere Absetzbecken (12) mit Oberflächenskimmern vorgesehen werden, mit welchen zur Rückgewinnung von Restöl Öl von der Oberfläche abgesaugt und zu Sammelbehältern geleitet wird.

8. Verfahren nach Anspruch 7,
**dadurch gekennzeichnet,**
**dass** die Abwasserzufuhr in den Riedbettbereich (20) gesteuert wird, so dass innerhalb einer Substratschicht mit den Wurzeln der Bepflanzung eine definierte Strömung, insbesondere eine laminare Überströmung mit einem zusätzlichen unterirdischen Strömungsregime, gegeben ist.

9. Verfahren nach Anspruch 7 oder 8,
**dadurch gekennzeichnet,**
**dass** das Abwasser in den einzelnen Bereichen (10, 20, 30, 40), insbesondere im Riedbettbereich (20), belüftet und/oder erwärmt wird.

10. Verfahren nach einem der Ansprüche 7 bis 9,
**dadurch gekennzeichnet,**
**dass** in das Abwasser Nährstoffe und/oder biologische Kulturen, insbesondere Mikroorganismen, Bakterien, Algen oder Pilze, eingespeist werden.

## Claims

1. Plant for the treatment and disposal of waste water containing salts and oil, in particular water used in oil production, comprising
- a feeding duct (3) for supplying the waste water,
- at least one reed bed area (20) having plants for the uptake and degradation of contaminants in the waste water,
- at least one modular basin area (30) having a plurality of utility basins (35), which are designed for the cultivation of plants, algae, for the culture of animals, fish, shrimps and/or micro-organisms whereby a utility basin (35), controlled by way of distribution means (17), can be supplied with treated waste water from the reed bed area (20) and/or from at least one other utility basin (35) and
- at least one saline area (40) for the reception of the residual water from the modular basin area (30) for the evaporation of water and the concentration of salt,
**characterized in that**
- the reed bed area (20) has several parallel arranged reed bed segments (25), which are each formed of several reed bed basins (27) that are arranged and flowed through in series,
- **in that** between the feeding duct (3) and the reed bed area (20) one settling area (10) is provided for receiving the waste water and in which a flow speed of the waste water is reduced for separating oil proportions,
- **in that** the settling area (10) has several settling basins (12) according to the number of reed bed segments (25) and
- **in that** on the settling area (10) a distribution channel (5) is provided for the supply and distribution of the waste water to the settling basins (12),
- **in that** for recovering residual oil in the settling area (10) with the several settling basins (12) surface skimmers are provided, with which oil can be sucked off from the surface and directed to collecting tanks.

2. Plant according to claim 1,
**characterized in that**
between the individual areas (10, 20, 30, 40) trafficable dams (60) are provided.

3. Plant according to claim 1 or 2,
**characterized in that**
the settling area (10), the reed bed area (20), the modular basin area (30) and the saline area (40) are arranged with their basins (12, 27, 35, 45) in a terraced manner and on decreasing levels in the flow direction of the waste water.

4. Plant according to any one of claims 1 to 3,
**characterized in that**
the flow of the waste water through the plant (1) is effected by way of gravitation.

5. Plant according to any one of claims 1 to 4,
**characterized in that**
a control means (15) with sensors (70) for measuring and setting chemical-physical parameters of the waste water is provided.

6. Plant according to any one of claims 1 to 5,
**characterized in that**
the ground of the reed bed area (20) has a lower sealing layer for sealing and an upper substrate layer for planting, and **in that** the reed bed area (20) is planted with reed plants, in particular Phragmites australis.

7. Method for the treatment and disposal of waste water containing salts and oil, in particular with a plant according to any one of claims 1 to 6, whereby the waste water successively flows through
- at least one reed bed area (20) having plants for the uptake and degradation of contaminants in the waste water,
- at least one modular basin area (30) having a plurality of utility basins (35), whereby a utility basin (35), in which useful animals, plants and/or micro-organisms are cultivated, being controlled by way of distribution means (17), is supplied with treated waste water from the reed bed area (20) and/or from at least one other utility basin (35) and
- at least one saline area (40) for the reception of the residual water from the modular basin area (30) and for the evaporation of water and the concentration of salt,
**characterized in that**
- several parallel arranged reed bed segments (25) of the reed bed area (20) are flowed through which are each formed of several reed bed basins (27) that are arranged in series and
- **in that** the waste water is received in at least one a settling area (10) to which follows up the reed bed area (20) and in which a flow speed of the waste water is reduced for separating oil proportions, whereby
- at the settling area (10) a distribution channel (5) is provided for the supply and distribution of the waste water to the settling basins (12) and
- **in that** in the settling area (10) according to the number of reed bed segments (25) several settling basins (12) are provided with surface skimmers, with which oil is sucked off from the surface and directed to collecting tanks for recovering residual oil.

8. Method according to claim 7,
**characterized in that**
the supply of waste water to the reed bed area (20) is controlled such that within a substrate layer with the roots of the planting a defined flow, in particular a laminar overflow with an additional underground flow regime, is present.

9. Method according to claim 7 or 8,
**characterized in that**
in the individual areas (10, 20, 30, 40), in particular in the reed bed area (20), the waste water is aerated and/or warmed.

10. Method according to any one of claims 7 to 9,
**characterized in that**
nutrients and/or biological cultures, in particular micro-organisms, bacteria, algae or fungi are fed to the waste water.

## Revendications

1. Installation de préparation et d'élimination d'eaux usées contenant des sels et des huiles, en particulier des eaux d'extraction de pétrole, avec
- une canalisation d'alimentation (3) pour l'amenée des eaux usées,
- au moins une zone de roselière (20) avec des plantes pour capter et détruire des impuretés présentes dans les eaux usées,
- au moins une zone (30) de bassins modulaires avec une pluralité de bassin de traitement (35) qui sont conformés pour élever des plantes, des algues, des animaux, des poissons, des crevettes et/ou des micro-organismes, un bassin de traitement (35) pouvant être alimenté de manière contrôlée, par l'intermédiaire de dispositifs de distribution (17), avec des eaux usées préparées provenant de la zone de roselière (20) et/ou d'au moins un autre bassin de traitement (35), et
- au moins une zone de salines (40) pour recueillir l'eau résiduelle en provenance de la zone de bassins modulaires (30) et pour faire évaporer l'eau et concentrer le sel,
***caractérisée***
- ***en ce que*** la zone de roselière (20) comprend plusieurs segments (25) de roselière qui sont formés chacun de plusieurs bassins (27) de roselière qui sont disposés et parcourus en série,
- ***en ce qu*'**entre la canalisation d'alimentation (3) et la zone de roselière (20) est prévue une zone de décantation (10) pour recevoir les eaux usées, dans laquelle une vitesse d'écoulement des eaux usées diminue pour décanter les parts huileuses,
- ***en ce que*** la zone de décantation (10) comprend plusieurs bassins de décantation (12) en un nombre correspondant au nombre des segments (25) de roselière, et
- ***en ce que*** dans la zone de décantation (10) est prévu un canal de distribution (5) pour amener et distribuer les eaux usées en direction des bassins de décantation (12),
- ***en ce que,*** dans la zone de décantation (10) avec la pluralité de bassins de décantation (12), il est prévu, pour récupérer l'huile résiduelle, des écumeurs de surface avec lesquels l'huile peut être aspirée de la surface et envoyée dans des récipients de collecte.

2. Installation selon la revendication 1, ***caractérisée en ce qu*'**entre les différentes zones (10, 20, 30, 40), il est prévu des levées (60) pouvant être empruntées par un véhicule.

3. Installation selon la revendication 1 ou 2, ***caractérisée en ce que*** la zone de décantation (10), la zone de roselière (20) de la zone de bassins modulaires (30) et la zone de salines (40) avec ses bassins (12, 27, 35, 45) sont disposées en terrasses et à des hauteurs décroissantes dans la direction d'écoulement des eaux usées.

4. Installation selon l'une quelconque des revendications 1 à 3, ***caractérisée en ce que*** l'écoulement des eaux usées à travers l'installation (1) s'effectue par gravité.

5. Installation selon l'une quelconque des revendications 1 à 4, ***caractérisée en ce qu*'**un dispositif de commande (15) avec des capteurs (70) pour mesurer et ajuster des paramètres physico-chimiques des eaux usées est prévu.

6. Installation selon l'une quelconque des revendications 1 à 5,
***caractérisée***
***en ce que*** le fond de la zone de roselière (20) comprend une couche inférieure d'étanchéité pour l'étanchéité et une couche supérieure de substrat pour la végétalisation, et
***en ce que*** la zone de roselière (20) est plantée de plantes de type roseau, en particulier de Phragmites australis.

7. Procédé de préparation et d'élimination d'eaux usées contenant des sels et des huiles, en particulier avec une installation selon l'une quelconque des revendications 1 à 6, dans lequel les eaux usées traversent successivement :
- au moins une zone de roselière (20) avec des plantes pour capter et détruire des impuretés présentes dans les eaux usées,
- au moins une zone de bassins modulaires (30) avec une pluralité de bassins de traitement (35), un bassin de traitement (35) dans lequel sont élevés des animaux et cultivés des plantes ou des micro-organismes utiles, bassin alimenté de manière contrôlée, par l'intermédiaire de dispositifs de distribution (17), avec des eaux usées préparées provenant de la zone de roselière (20) et/ou d'au moins un autre bassin de traitement (35), et
- au moins une zone de salines (40) pour recueillir l'eau résiduelle en provenance de la zone de bassins modulaires (30) et pour faire évaporer l'eau et concentrer le sel,
***caractérisé***
- ***en ce que*** plusieurs segments (25) de roselière de la zone de roselière (20) disposés en parallèle, qui sont formés chacun de plusieurs bassins (27) de roselière qui sont disposés en série, sont traversés par les eaux, et
- ***en ce que*** les eaux usées sont captées dans au moins une zone de décantation (10) qui est suivie de la zone de roselière (20), dans laquelle une vitesse d'écoulement des eaux usées diminue pour séparer les parts huileuses,
- dans lequel il est prévu, dans la zone de décantation (10), un canal de distribution (5) pour alimenter et distribuer les eaux usées en direction des bassins de décantation (12), et
- ***en ce que,*** dans la zone de décantation (10) en nombre correspondant à celui des segments (25) de roselière, il est prévu plusieurs bassins de décantation (12) avec des écumeurs de surface avec lesquels, pour récupérer l'huile résiduelle, l'huile peut être aspirée de la surface et envoyée dans des récipients de collecte.

8. Procédé selon la revendication 7, ***caractérisé en ce que*** l'amenée des eaux usées vers la zone de roselière (20) est commandée de telle sorte qu'à l'intérieur d'une couche de substrat contenant les racines des végétaux, on ait un écoulement défini, en particulier un écoulement laminaire avec un régime d'écoulement souterrain supplémentaire.

9. Procédé selon la revendication 7 ou 8, ***caractérisé en ce que*** les eaux usées sont ventilées et/ou réchauffées dans les différentes zones (10, 20, 30, 40), en particulier dans la zone de roselière (20).

10. Procédé selon l'une quelconque des revendications 7 à 9, ***caractérisé en ce que*** dans les eaux usées sont introduits des nutriments et/ou des cultures biologiques, en particulier des micro-organismes, des bactéries, des algues ou des champignons.
